# EUROPEAN PATENT APPLICATION

(11) **EP 1 396 508 A1**
(43) Date of publication of application: **10.03.2004**
(21) Application number: 02019907.1
(22) Date of filing: 04.09.2002
(51) Int. Cl.: C08F 220/34, C08F 220/04

(54) **The production of aqueous dispersions of cationic homo- and copolymers using amphoteric protective colloids**

(71) Applicant: BASF AKTIENGESELLSCHAFT, 67056 Ludwigshafen (DE)
(72) Inventor: The designation of the inventor has not yet been filed

(57) **Abstract**

A process for the production of water-soluble or water-swellable cationic polymers by
(i) free-radically initiated copolymerization of monomer mixtures in water comprising
   (a) from 1 to 99% by weight of a cationic monomer or quaternizable monomer,
   (b) from 1 to 99% by weight of a water-soluble monomer,
   (c) from 0 to 10% by weight of a bi- or polyfunctional, free-radically copolymerizable monomer, adjusting the amounts (a) to (c) in such a way that the resulting polymer has an overall positive charge,
      in the presence of 1 to 100% of the amount of a salt which is necessary to saturate the reaction medium with said salt and
      in the presence of 0,1 to 20 % by weight referred to the weight of the dispersion, of an amphoteric dispersant having an overall negative charge, and
(ii) subsequent quaternization of the polymer if the monomer (a) employed is a non-quaternized monomer is disclosed.

## Description

The present invention relates to aqueous dispersions comprised of water-soluble and/or water-swellable cationic copolymers, processes for making said dispersions, and methods of using said dispersions in water-treating, dewatering, water clarifications, papermaking, oil field, soil conditioning, mineral processing, hair and skin cosmetic, and biotechnological applications.

Cationic polymers are of special interest in fields such as paper manufacturing, waste-water treatment, textiles and cosmetic formulations (EP-A-1064924 and DE-A-197 31 907).

Crosslinked cationic polymers have also shown advantageous properties as thickeners and conditioners (US-A-4,806,345; WO 93/25595; DE-A-19 731 64; WO 97/35544).

Such polymers are currently produced by homo- or copolymerization in homo- or heterogeneous phase. The homogeneous solution polymerization leads to aqueous polymer solutions of low solids content and high viscosity, which renders them difficult to handle and store. Furthermore, the low solids content results in high shipping costs.

The production of such polymers in heterogeneous phase, for example by the water-in-oil emulsion polymerization, can afford high solids content mixtures of high-molecular weight (crosslinked) water-soluble or swellable cationic polymers.
A major disadvantage of this system is that in many fields of application, the presence of an organic solvent is ecologically and toxicologically unacceptable.

These problems can be solved by the use of an aqueous dispersion of water-swellable and high-molecular weight water-soluble polymers that have advantageously low bulk viscosities, high active solids content, minimal quantities of dilutive material, and that dissolve rapidly. Aqueous dispersions typically consist of a discontinuous polymer-containing phase and a continuous aqueous phase. The discontinuous polymer-containing phase may contain water. The continuous phase generally contains water, a different water-soluble polymeric dispersant and/or salt.

Such aqueous dispersions of cationic polymers have been extenively described in the art. In many embodiments, salts are used to precipitate the polymer that is formed during the polymerization (WO 98/14490). The precipitated polymer particles are then stabilized with an appropriate dispersant. Without the appropriate dispersant, the precipitated polymer particles tend to stick together and form a mass, rendering handling very difficult. Ideally, the end-result is a aqueous dispersion of water-soluble or swellable cationic polymer, which displays an advantageously low bulk viscosity despite having a high solids content.

In patent WO 99/46207, for example, is described the preparation of aqueous dispersions of high molecular weight cationic polymers. Salts or a combination of salts are used as well as cationic protective colloid. Water-in-water emulsions of cationic acrylate and acrylamides in the presence of salts are also disclosed in patent EP 637581. In this patent, cationic homopolymers or copolymers of a cationic and neutral monomers are used as protective colloids. Furthermore, in WO 98/14490, cationic polymers or copolymers of neutral and cationic monomers or copolymers of neutral and anionic monomers are described as increasing the stability of water-in-water emulsions.

EP-A-183466 discloses a process for obtaining a dispersion of water-soluble polymer which comprises dissolving a monomer in an aqueous solution of at least one salt and conducting polymerization while depositing the polymer as fine particles in the presence of a dispersant (protective colloid). However, the polymer used as dispersant (protective colloid) is required to have charges of the same kind as the deposited polymer.

Despite efforts to make satisfactory aqueous dispersions, the problem remains of producing aqueous dispersions of water-swellable and high-molecular weight water-soluble polymers that have advantageously low bulk viscosities (< 10000 mPas), high solids content (> 20%), that dissolve readily and can be prepared with a broad range of cationicity. Moreover, a major draw-back of the said dispersions is the limited stability. The long-term stability (> 1 month) of the dispersions in many embodiments is limited, due to coagulation and/or phase separation.

This problem was solved in the present invention by providing novel aqueous dispersions of high-molecular weight cationic water-soluble polymers in the presence of amphoteric protective colloids of the opposite charge, as well as processes for making and methods for using said aqueous dispersions.

Accordingly, the invention relates to a process for the production of water-soluble or water-swellable cationic polymers by
(i) free-radically initiated copolymerization of monomer mixtures in water comprising
   (a) from 1 to 99% by weight of a cationic monomer or quaternizable monomer,
   (b) from 1 to 99% by weight of a neutral monomer,
   (c) from 0 to 10% by weight of a bi- or polyfunctional, free-radically copolymerizable monomer,
   adjusting the amounts (a) in such a way that the resulting polymer has an overall positive charge,
   in the presence of 1-100% of the amounc of a (mixture of) salt(s) which is necessary to saturate the reaction medium with said salt and
   in the presence of 0,1-20 % by weight referred to the weight of the dispersion, of an amphoteric dispersant having an overall negative charge, and
(ii) subsequent quaternization of the polymer if the monomer (a) employed is a non-quaternized monomer.

Suitable monomers (a) are the N-vinylimidazole derivatives of the formula (I), in which R¹ to R³ are hydrogen, C₁-C₄-alkyl or phenyl.

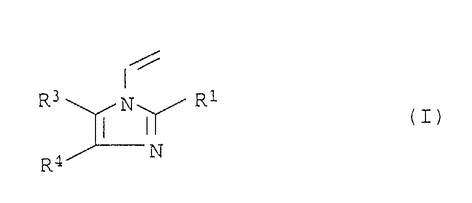

Also suitable are diallylamines or the formula (II), in which R⁴ is C₁-C₂₄-alkyl.

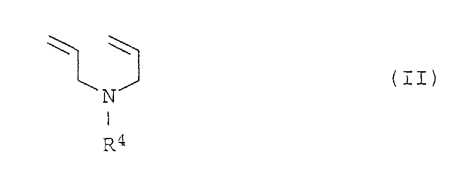

Additionally suitable are N,N-dialkylaminoalkyl acrylates and methacrylates, and N,N-dialkylaminoalkylacrylamides and -methacrylamides, of the formula (III), 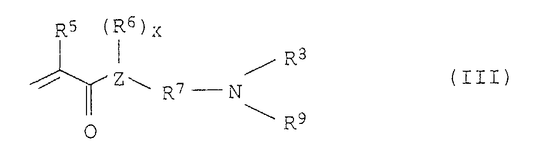 where R⁵ and R⁶ independently are hydrogen or methyl, R⁷ is optionally alkyl-substituted C₁-C₂₄-alkylene and R⁸ and R⁹ are C₁-C₂₄-alkyl. Z is nitrogen if x = 1 or is oxygen if x = 0.

Examples for compounds (I) are listed in Table 1:

**Table 1**

| R¹ | R² | R³ |
|---|---|---|
| H | H | H |
| Me | H | H |
| H | Me | H |
| H | H | Me |
| Me | Me | H |
| H | Me | Me |
| Me | H | Me |
| Ph | H | H |
| H | Ph | H |
| H | H | Ph |
| Ph | Me | H |
| Ph | H | Me |
| Me | Ph | H |
| H | Ph | Me |
| H | Me | Ph |
| Me | H | Ph |
| Me = Methyl | | |
| Ph = Phenyl | | |

Additional monomer derivatives of the formula (I) are Ethyl-, Propyl- or Butyl-Derivatives of the Methyl-substituted 1-Vinylimidazole Monomers of the formula (I) listed in Table 1.

Examples for Compounds of the general Formula (II) are Diallyl amine, in which R⁴ is Methyl, Ethyl, iso- or n-Propyl, iso-, nor tert.-Butyl, Pentyl, Hexyl, Heptyl, Octyl, Nonyl or Decyl. Examples of alkyl groups R⁴ are Undecyl, Dodecyl, Tridecyl, Pentadecyl, Octadecyl und Icosayl.

Examples of compounds of the formula (III) are N,N-dimethylaminomethyl (meth)acrylate, V,N-diethylaminomethyl (meth)acrylate, N,N-dimethylaminoethyl (meth)acrylate, N,N-diethylaminoethyl (meth)acrylate, N,N-dimethylaminobutyl (meth)acrylate, N,N-diethylaminobutyl (meth)acrylate, N,N-dimethylaminohexyl (meth)-acrylate, N,N-dimethylaminooctyl (meth)acrylate, N,N-dimethylaminododecyl (meth)acrylate, N-[3-(dimethylamino)propyl]methacrylamide, N-[3-(dimethylamino)propyl]acrylamide, N-[3-(dimethylamino)-butyl]methacrylamide, N-[8-(dimethylamino)octyl]-methacrylamide, N-[12-(dimethylamino)dodecyl]methacrylamide, N-[3-(diethylamino)propyl]methacrylamide and N-[3-(diethylamino)propyl]acrylamide.

Examples of compounds suitable for quaternizing the compounds of the formulae (I) - (III) are C₁-C₂₄-alkyl halides, examples being methyl chloride, methyl bromide, methyl iodide, ethyl chloride, ethyl bromide, propyl chloride, hexyl chloride, dodecyl chloride and lauryl chloride, and benzyl halides, especially benzyl chloride and benzyl bromide. Further suitable quaternizing agents are dialkyl sulfates, especially dimethyl sulfate or diethyl sulfate. The basic monomers of the formulae (I) - (III) can also be quaternized with alkylene oxides, such as ethylene oxide or propylene oxide, in the presence of acids.

Quaternization of the monomer or of a polymer with one of said quaternizing agents can be carried out by conventional methods.

Preferred quaternizing agents are methyl chloride, dimethyl sulfate and diethyl sulfate.

Preferred examples of monomers (a) are 3-methyl-1-vinylimidazolium chloride and methosulfate, dimethyldiallylammonium chloride, and also N,N-dimethylaminoethyl methacrylate and N-[3-(dimethylamino)propyl]methacrylamide which have been quaternized by methyl chloride, dimethyl sulfate or diethyl sulfate.

Particularly preferred monomers (a) are 3-methyl-1-vinylimidazolium chloride and methosulfate, N-[3-(trimethylamino)-propyl]methacrylamide chloride and dimethyldiallylammonium chloride, with very particular preference being given to 3-methyl-1-vinylimidazolium chloride and methosulfate.

Also mixtures of the said monomers (a) can be used.

The monomers (a) are used in amounts of 1 to 99% by weight referred to the weight of all monomers (a) co (c) preferably from 5 to 80% by weight and, with particular preference, from 10 to 40% by weight.

Suitable water-soluble monomers (b) are N-vinyllactams, examples being N-vinylpiperidone, N-vinylpyrrolidone and N-vinylcaprolactam, N-vinylacetamide, N-vinylformamide, N-methyl-N-vinylacetamide, acrylamide, methacrylamide, N,N-dimethylacrylamide, N-methylolmethacrylamide, N-vinyloxazolidone, N-vinyltriazole, hydroxyalkyl (meth)acrylates, such as hydroxyethyl (meth)acrylate and hydroxypropyl (meth)acrylate, or alkylethylene glycol (meth)acrylates having 1 to 50 ethylene glycol units in the molecule.

Non-Polar monomers (b), such as Acrylate and Styrole with a low water-solubility, which do not render the said cationic polymer water insoluble can be copolymerized. For example: Butadien, α-Alkene, Vinylcyclohexane, Vinylhalogenide, Acrylnitrile, Alkyl (alk')acrylate oder Aryl (alk)acrylates in which the alkyl group consists of 1-12 C Atoms, for example Methyl(meth)acrylate, Ethyl(meth)acrylate, Propyl (meth)acrylate, Butyl(meth)acrylate, Hexyl(meth)acrylate, Ethylhexyl(meth)acrylate, Isoalkyl(meth)-acrylate, Cyclohexyl(meth)acrylate, or aromatic (Meth)-acrylate, or Alkyl or Aryl(alk)acrylamide, in which the alkyl group consists of 1-12 C atoms, e.g. Methyl(meth)acrylamide, Ethyl(meth)acrylamide, Ethyl (meth)acrylamide, t-Butyl(meth)-acrylamide, Dimethyl(meth)acrylamide, Hexyl(meth)acrylamide, Ethylhexyl(meth)acrylamide, Isoalkyl(meth)acrylamide, Cyclohexyl(meth)acrylamide, oder aromatische (meth)acrylamide, t-Butyl (meth)acrylamide.

Suitability extends to unsaturated carboxylic acids, examples being acrylic, methacrylic, crotonic, itaconic, maleic and fumaric acid, and their corresponding anhydrides, and also to unsaturated sulfonic acids, such as acrylamidomethylpropanesulfonic acid.

Also mixtures of the said monomers (b) can be used.

The monomers (b) are used in amounts of 1-99% by weight referred to the weight of all monomers (a) to (c) preferably from 20 to 95% by weight and, with particular preference, from 40 to 90% by weight.

Monomers (c), which possess a crosslinking function, are compounds having at least 2 ethylenically unsaturated, nonconjugated double bonds in the molecule.

Suitable monomers (c) are, for example, acrylic esters, methacrylic esters, allyl ethers or vinyl ethers of at least dihydric alcohols. The OH groups of the parent alcohols may be in fully or partially etherified or esterified form; however, the monomers (c) contain at least two ethylenically unsaturated groups.

Examples of the parent alcohols are dihydric alcohols such as 1,2-ethanediol, 1,2-propanediol, 1,3-propanediol, 1,2-butanediol, 1,3-butanediol, 2,3-butanediol, 1,4-butanediol, buc-2-ene-1,4-diol, 1,2-pentanediol, 1,5-pentanediol, 1,2-hexanediol, 1,6-hexanediol, 1,10-decanediol, 1,2-dodecanediol, 1,12-dodecanediol, neopentyl glycol, 3-methylpentane-1,5-diol, 2,5-dimethyl-1,3-hexanediol, 2,2,4-trimethyl-1,3-pentanediol, 1,2-cyclohexanediol, 1,4-cyclohexanediol, 1,4-bis(hydroxymethyl)cyclohexane, neopentyl glycol mono(hydroxypivalate), 2,2-bis(4-hydroxyphenyl)propane, 2,2-bis[4-(2-hydroxypropyl)phenyl]propane, diethylene glycol, triethylene glycol, tetraethylene glycol, dipropylene glycol, tripropylene glycol, tetrapropylene glycol, 3-thiopentane-1,5-diol, and also polyethylene glycols, polypropylene glycols and polytetrahydrofurans each having molecular weights of from 200 to 10,000. In addition to the homopolymers of ethylene oxide and/or propylene oxide it is also possible to employ block copolymers of ethylene oxide or propylene oxide or copolymers comprising incorporated ethylene oxide and propylene oxide groups. Examples of parent alcohols having more than two OH groups are trimethylolpropane, glycerol, pentaerythritol, 1,2,5-pentanetriol, 1,2,6-hexanetriol, triethoxycyanuric acid, sorbitan, and sugars such as sucrose, glucose and mannose. The polyhydric alcohols can of course also be employed after reaction with ethylene oxide or propylene oxide, as the corresponding ethoxylates or propoxylates, respectively. The polyhydric alcohols can also first be converted into the corresponding glycidyl ethers by reaction with epichlorohydrin.

Further suitable monomers (c) are the vinyl esters or the esters of monohydric unsaturated alcohols with ethylenically unsaturated C₃-C₆ carboxylic acids, for example acrylic, methacrylic, itaconic, maleic or fumaric acid. Examples of such alcohols are allyl alcohol, 1-buten-3-ol, 5-hexen-1-ol, 1-octen-3-ol, 9-decen-1-ol, dicyclopentenyl alcohol, 10-undecen-1-ol, cinnamyl alcohol, citronellol, crotyl alcohol or cis-9-octadecen-1-ol. The monohydric unsaturated alcohols can also, however, be esterified with polybasic carboxylic acids, examples being malonic, tartaric, trimellitic, phthalic, terephthalic, citric or succinic acid.

Other suitable monomers (c) are esters of unsaturated carboxylic acids with the polyhydric alcohols described above, examples being esters of oleic, crotonic, cinnamic or 10-undecenoic acid.

Also suitable as monomers (c) are straight-chain or branched, linear or cyclic, aliphatic or aromatic hydrocarbons which have at least two double bonds which in the case of aliphatic hydrocarbons must not be conjugated: examples are divinylbenzene, divinyltoluene, 1,7-octadiene, 1,9-decadiene, 4-vinyl-1-cyclohexene, trivinylcyclohexane or polybutadienes having molecular weights of from 200 to 20,000.

Yet more suitable monomers (c) are the acrylamides, methacrylamides and N-allylamines based on at least dihydric amines. Examples of such amines are 1,2-diaminomethane, 1,2-diaminoethane, 1,3-diaminopropane, 1,4-diaminobutane, 1,6-diaminohexane, 1,12-dodecanediamine, piperazine, diethylenetriamine and isophoronediamine. Also suitable are the amides of allylamine and unsaturated carboxylic acids such as acrylic, methacrylic, itaconic or maleic acid, or at least dibasic carboxylic acids as have been described above.

Triallylamine and triallylmonoalkylammonium salts, for example triallylmethylammonium chloride or triallylmethylammonium methyl sulfate, are also suitable as monomers (c).

Further suitable monomers (c) are N-vinyl compounds of urea derivatives, at least difunctional amides, cyanurates or urethanes, for example of urea, ethyleneurea, propyleneurea or tartaramide, such as N,N'-divinylethyleneurea or N,N'-divinylpropyleneurea.

Other suitable monomers (c) are divinyldioxane, tetraallylsilane and tetravinylsilane.

It is preferred to employ those monomers (c) which are soluble in the monomer mixture.

Also mixtures of the said monomers (c) can be used.

The monomers (c) are used in amounts of 0 to 10% by weight referred to the weight of all monomers (a) to (c) preferably from 0 to 5% by weight and, with particular preference, from 0 to 2,5% by weight.

In the present invention, salt is used to deposit the polymer as it is formed and hence effectively reduce the bulk viscosity of the aqueous dispersion. The polymerization of the water-soluble monomers will produce particles of water-soluble polymer when suitable agitation is provided. The selection of the particular salt to be used is dependent upon the particular polymer to be produced, and the stabilizer to be employed. The selection of salt, and the amount of salt present should be made such that the polymer being produced will be insoluble in the salt solution.

Effective amounts of salts tend precipitate the water-soluble polymer thereby reducing the bulk viscosity of the aqueous dispersion. The different types of salts that can be used for the purpose of precipitating the water-soluble polymer have been extensivelly described in WO 98/14405 and WO 00/20470, which are incorporated by reference herewith.

In the present invention, the water-soluble salts may be inorganic salts, preferably kosmotropic, such as a chloride, sulfate, phosphate, or hydrogenphosphate of metals and ammonia. Typical examples include: sodium sulfate, potassium sulfate, ammonium sulfate, magnesium sulfate, aluminium sulfate, sodium chloride, calcium chloride, sodium dihydrogephosphate, diammomium hydrogenphosphate, dipotassium hydrogenphosphate, calcium phosphate, sodium citrate, and ferric sulfate.

These salts may be used singly or as mixtures of two or more salts. In many instances, the salt mixture is more effective than either salt alone, on a weight basis. Chaotropic salts may also be used, such as thiocyanates, perchlorates, chlorates, nitrates, bromides, and iodides. Typical examples are calcium nitrate, sodium nitrate, ammonium nitrate, aluminium nitrate, sodium thiocyanate and sodium iodide.

The amount of salt to be used in the present invention varies depending on the monomer type, and type of salt, the molar ratio of the salt to monomer used, and on it's solubility.

Generally, the salt is used in an amount of 1to 100% of the maximum amount of salt which is soluble in the reaction medium under the applied conditions. Preferably an amount of 5 to 95% more preferably an amount of 20 to 80% is used. Furthermore, it is possible to add more salt to the dispersion after completion of the polymerization, in the range of solubility.

As dispersant (protective colloid) a second water-soluble amphoteric polymer, preferably a vinyl-addition polymer with an overalll negative (opposite to the dispersed polymer) is used. Preferably the amphoteric dispersant has an overalll negative charge at pH = 6,75. The overalll charge of the amphoteric polymer can be measured by electrophoresis experiments.

Amphoteric dispersants are defined as polymers consisting of repeat units containing cationic charge as well as of repeat units containing anionic charge. Neutral repeat units may also be present.

The amphoteric dispersants can be obtained by:
(i) free-radically initiated copolymerization of monomer mixtures in water comprising
   (a) from 1 to 99% by weight of an anionic monomer,
   (b) from 1 to 99% by weight of a cationic monomer or quaternizable monomer,
   (c) from 0 to 98% by weight of a neutral monomer,
adjusting the amounts (a) to (b) in such a way that the resulting polymer has an overalll negative charge,

Suitable anionic monomers (a) are (Meth)acrylic acid, ethacrylic acid, maleic acid, itaconic acid, 2-Acrylamido-2-methylpropansulfonic acid, vinyl sulfonic acid, Vinylphosphoric acid, styrol sulfuric acid, as well as their ammonium and alkalimetalic salts. Anionic groups can also be obtained by hydrolysis of (Meth)acrylamide or (Meth)acrylate groups.

Suitable cationic monomers (b) are with dimethylsulfate, diethylsulfate, oder MeCl quarternized Vinylimidazoles, dialkylaminoalkyl(alk)acrylates, dialkylaminoalkylacrylamides, diallylalkyl ammonium, and vinylamin. The cationic charge can also be introduced by post-modification of the Polymers for example by quarternizing (with methylchloride, oder dimethylsulfate, diethylsulfate), or by protonation of the monomers, oder by hydrolysis of for example Vinylformide to Vinylamine.

Suitable neutral Monomers (c) are N-Vinylpyridine, N-Vinylacetamide, N-Vinylpyrrolidone, Hydroxyalkyl(meth)acrylate, Acrylamide, Methacrylamide, vinyl formamide, PEG-Acrylate and Methacrylate Derivatives, N-Vinylcaprolactam. Acrylate and Styrole with a low water-solubility, as well as non-polar monomers which do not render the polymer water insoluble can be copolymerized. For example: Butadien, a-Alkene, Vinylcyclohexane, Vinylhalogenide, Acrylnitrile, Alkyl (alk')acrylate oder Aryl (alk)acrylates in which the alkyl group consists of 1-12 C Atoms, for example Methyl(meth)acrylate , Ethyl(meth)acrylate, Propyl (meth)acrylate, Butyl(meth)acrylate, Hexyl(meth)acrylate, Ethylhexyl(meth)acrylate, Isoalkyl(meth)acrylate, Cyclohexyl(meth)-acrylate, oder aromatische (Meth)acrylate, or Alkyl or Aryl(alk)-acrylamide, in which the alkyl group consists of 1-12 C atoms, e.g. Methyl(meth)acrylamide, Ethyl(meth)acrylamide, Ethyl (meth)-acrylamide, t-Butyl(meth)acrylamide, Dimethyl(meth)acrylamide, Hexyl(meth)acrylamide, Ethylhexyl(meth)acrylamide, Isoalkyl(meth)acrylamide, Cyclohexyl(meth)acrylamide, oder aromatische (meth)acrylamide, t-Butyl (meth)acrylamide.

In a preferred embodiment the amphoteric dispersant is produced by polymerization of monomers:
(a) from 1 to 99%, more preferred from 20 to 90% and still more preferred from 40 to 80% by weight of acrylic acid, ethacrylic acid, and/or 2-Acrylamido-2-methylpropansulfonic acid, as well as their ammonium and alkalimetalic salts,
(b) from 1 to 99%, more preferred from 2-80% and and still more preferred from 5-50% by weight of methyl vinylimmidazolium, methyl vinylimmidazolium chloride, trimethyl ammonium propyl methacrylat (chloride salt), trimethyl ammonium propyl methacrylat (methyl sulfate salt), trimethyl ammonium propylmethacrylat (ethyl sulfate salt), trimethyl ammonium propylacrylamide (chloride salt), dimethyldiallyl ammonium chloride, and/or vinyl amine,
(c) from 0 to 98%, more preferred from 0-50% and still more preferred 0% by weight of N-vinyl pyridine, N-vinyl acetamide, N-vinyl pyrrolidone, hydroxyalkyl (meth) acrylate, acrylamide, methacrylamide, and/or vinyl formamide,
in which the ratio of monomer (a) to (b) is such that the polymer has an overalll negative charge at pH 6,75.

The amphoteric dispersant can be prepared either by classical copolymerization in solution, bulk, precipitation, dispersion, emulsion suspension or microemulsion.

The charge of the polymer can be the sum of the charges of all monomers applied or can be influenced by a chemical modification of the polymer, e.g. hydrolysis of vinylformamide units to vinylamine units or quaternizing amine units.

Preferrably, the amphoteric dispersant is produced by polymerization of monomers:
(a) acrylic acid, methacrylic acid, as well as their ammonium and alkalimetalic salts,
(b) methyl vinylimmidazolium methyl sulfate, trimethyl ammonium propylmethacrylat (chloride salt), dimethyldiallyl ammonium chloride, and vinyl amine,
in which the ratio of monomer (a) to (b) is such that the polymer has an overalll negative charge at pH 6,75.

Most preferably, the amphoteric dispersants contain of copolymers of acrylic acid and vinyl amine formed by post-reaction of vinyl formamide recurring units, methacrylic acid and vinyl amine formed by post-reaction of vinyl formamide recurring units, methacrylic acid and dimethyldiallyl ammonium chloride, acrylic acid and dimethyldiallyl ammonium chloride in which the ratio of anionic monomers to cationic (protonated) monomers is such that the polymer has an overall negative charge ar pH 6,5.

The k-values of the polymer electrolytes as dispercants are in the range of 10 to 350, preferably 20 to 200 and most preferably 35 to 115. The k-values are measured at 25°C as 0,1 wt.% solution in 5 wt.% NaCl solution according to Fikentscher, Cellulose-chemie, Bd. 13, S. 58-64 (1932).

The polymer electrolyte that serves as a dispersant in the present invention can be obtained by dissolving the said monomers in an aqueous medium, adding a polymerization initiator such as a water-soluble azo-type polymerization initiator like 2,2'-azobis(2-amidinopropane) 2-hydrochloride (V-50), or 2,2'-azobis-[2-(2-imidazoline-2-yl)propane] 2-hydrochloride (VA-44), or a water-soluble redox-type polymerization initiator like the combined use of ammonium persulfate and sodium hydrogen sulfite and performing radical polymerization to obtain the desired dispersant. The reaction temperature of polymerization can be arbitrarily selected within the range of 0-100°C according to the properties of the polymerization initiator. The polymerization can take place at atmospheric or autogenous pressure The addition of a chain transfer agent such as isopropyl alcohol and mercaptan, which are normally used in radical polymerization to adjust molecular weight, can also be arbitrarily selected. Although polymerization of the polymer electrolyte that serves as a dispersant is normally performed by standing aqueous solution polymerization, it is preferable to perform polymerization while stirring in consideration of product uniformity.

The amount of amphoteric dispersant employed in the process according to the invention is 0,1 to 20% by weight of the total weight of the dispersion (i.e. the weight of the monomers, the water and the salt), preferably 0,25 to 10% by weight and more preferably 1 to 5 % by weight.

Aqueous dispersions of water-soluble polymers are preferably formed by polymerization of the corresponding monomers to form the first cationic water-soluble polymer, in the presence of at least one dispersant and a (mixture of) salts. Polymerization may be effected by any initiating means, including redox, thermal or irradiating types. Initiators which can be employed for the free-radical polymerization are the water-soluble and water-insoluble peroxo and/or azo compounds customary for this purpose, examples being alkali metal or ammonium peroxodisulfates, dibenzoyl peroxide, tert-butyl perpivalate, tert-butyl per-2-ethylhexanoate, di-tert-butyl peroxide, tert-butyl hydroperoxide, azobisisobutyronitrile, azobis(2-amidinopropane) dihydrochloride, 2,2'-azobis(2-amidino-propane)dihydrochloride (V-50), or 2,2'-azobis(2-methylbutyronitrile). Also suitable are initiator mixtures or redox initiator systems, such as ascorbic acid/iron(II) sulfate/sodium peroxodisulfate, tert-butyl hydroperoxide/sodium disulfite, tert-butyl hydroperoxide/sodium hydroxymethanesulfinate. The initiators can be employed in the customary amounts, for example from 0.05 to 5% by weight based on the amount of monomers to be polymerized.

The polymerization can be started by either batch addition of starter prior to the polymerization, or by slow addition of starter, or a combination of both. Likewise, the entire amount of the salt may be added at the beginning of the polymerization process, or portions of the salt may be added intermittently at any time during the polymerization process. The polymerization can be conducted either batch or by slow addition of monomer, or a combination of both. The entire amount of the salt may be added at the beginning of the polymerization process, or portions of the salt may be added intermittently at any time during the polymerization process Polymerization parameters, e.g. temperature, and time may be chosen in a known manner, and may be varied during the course of the polymerization. Polymerization is generally affected in the presence of an inert gas, e.g. nitrogen. Conventional processing aids e.g. chelating agents, sequestrants, pH adjusters, etc. may be added as required.

The aqueous dispersion of the instant invention my be dehydrated to increase the total polymer solids content, or to create substantially dry products. Any means known in the art e.g. stripping, spray drying, solvent precipitation, etc. may be used to reduce the water content. Surprisingly, partial dehydration may reduce the bulk viscosity of an aqueous dispersion, in spite of the tendency for dehydration to increase polymer solids. Substantially dry water-soluble or water-swellable vinyl-addition polymer particles can be obtained by spray-drying the aqueous dispersion into a gas stream and collecting the resultant polymer particles as described extensively in patent WO 98/14405.

Another embodiment of the invention are dispersions of water-soluble or water swellable polymers obtainable with a process as described above.

Another embodiment of the invention is the use of the polymers for paper, oil, water treatment, mining, cosmetics and textile industries. Examples of suspensions of dispersed solids may be dewatered by means of the instant invention are municipal and industrial waste, potable water clarification, etc. Other applications which may benefit from the advantageous aspects of the instant invention include oil amendment, reforestation, erosion control, seed protection/growth, where the aqueous dispersion or dry polymer, preferably an aqueous admixture thereof, is advantageously applied to soil. Other examples of suspensions of solids which may be dewatered by means of the instant invention are found in the papermaking area, such as retention aids, drainage aids, formation aids, washer/thickener/drainage production aid, charge control agents, or for deinking, settling, color removal or for sludge dewatering. The polymers of the instant invention may be used in oil field applications such as petroleum refining, water clarification, waste dewatering, and oil removal see e.g. US 5,330,650. Dewatering and clarification application for the aqueous dispersions and dry polymers of the instant invention may also be found in the food processing area, e.g. dewatering of poultry beef, pork and potato as well as sugar processing clarification, and sugar beet clarification.

Mining and mineral applications include treating various mineral slurries, coal refuce dewatering, and thickening. Biotechnological applications for the said dispersions and dry polymers include dewatering and clarification of wastes and preferably, dewatering and clarification of fermentation broths. Application of the said polymer dispersions and dry polymer in the textile industries include thickening and agents for color removal. For cosmetic applications the said polymers can be used as thickeners and conditioning agents in skin care and hair care formulations.

### Examples:

### Abbreviations:

- DMAEA·MeCl:: Dimethylaminoethylacrylate-Methylchlorid
- QUAT 311:: Dimethylaminoethylmethacrylate-Diethylsulfat
- DADMAC:: Diallyl dimethylammonium chlorid
- VP:: Vinylpyrrolidon
- VFA:: vinylformamid

The following examples are set forth for illustration purposes only and are not to be construed as limits on the present invention. Comparative examples 1-6 clearly indicate that the use of dispersants with only anionic or cationic charges do not lead to stable dispersions. Comparative example 7 shows that unstable dispersions are also obtained using amphoteric copolymers with an overalll cationic charge. Examples 3-10 clearly illustrate that stable dispersions are obtained with amphoteric dispersants having an overalll negative charge under the polymerization conditions.

### Comparative example 1

### Polymerization of VP and Quat-311 in the presence of sodium sulfate, with an anionic dispersant

Sodium sulfate (77 g), vinylpyrrolidone (128 g), Quat-311 (64 g, 50 wt.-% solution in water) were dissolved in water (300 g). As dispersant, 43 g of poly(maleic acid-co-acrylic acid) (40 wt.-% solution in water, Sokalan CP5) was added. The pH was adjusted to a value of 6.75 with a 5% solution of sulfuric acid and the emulsion was purged with nitrogen gas for ca. 10 minutes. The radical initiator (V-50; 0.24 g) was then added and the reaction mixture was heated to 60°C under a nitrogen atmosphere. After stirring the mixture at this temperature for 3 hours, a second batch of VA-50 (0.48 g) was added and the mixture was stirred further for 3 hours at 70°C and then cooled to room temperature. A white suspension was obtained of 23% polymer content and a viscosity of 800 mPas. The emulsion was stable for 5 hours, after which separation occurred.

### Comparative example 2

### Polymerization of VP and Quat-311 in the presence of sodium sulfate, with an anionic dispersant

Sodium sulfate (77 g), vinylpyrrolidone (128 g), Quat-311 (64 g, 50 wt.-% solution in water) were dissolved in water (379 g). As dispersant, 42 g of polyacrylic acid (Sokalan PA80) (35 wt.-% in water) was added. The pH of was adjusted to a value of 6.75 with a 50% solution of sodium hydroxide and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.96 g) was added and the mixture was stirred further for 3 hours at 70°C and then cooled to room temperature. A white suspension was obtained of 23% polymer content and a viscosity of 850 mPas. The emulsion separated overnight.

### Comparative example 3

### Polymerization of VP and Quat-311 in the presence of sodium sulfate, with a cationic dispersant

Sodium sulfate (77 g), vinylpyrrolidone (128 g), Quat-311 (64 g, 50 wt.-% solution in water) were dissolved in water (300 g).
As dispersant, 75 g of poly(vinylamine,) (20 wt.-% solution in water, Catiofast PR8106) was added. The pH of was adjusted to a value of 6.75 with a 5% solution of sulfuric acid and the emulsion was purged with nitrogen gas for ca. 10 minutes. The radical initiator (V-50; 0.24 g) was then added and the reaction mixture was heated to 60°C under a nitrogen atmosphere. After stirring the mixture at this temperature for 3 hours, a second batch of VA-50 (0.48 g) was added and the mixture was stirred further for 3 hours at 70°C and then cooled to room temperature. A white suspension was obtained of 23% polymer content and a viscosity of 100 mPas. The emulsion separated overnight.

### Comparative example 4

### Polymerization of VP and diallylamino dimethylammonium chloride in the presence of sodium sulfate, using a cationic dispersant

Sodium sulfate (77 g), vinylpyrrolidone (128 g), Diallylamino dimethylammonium chloride (50 g, 65 wt.-% Solution in water) and 0,48 pentaerythrittetraallylether were dissolved in water (390 g). As dispersant, 63 g of poly(vinylamine, Catiofast PR8106) (25 wt% solution in water) was added. The pH of was adjusted to a value of 6.75 with a 5% solution of sulfuric acid and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.48 g) was added and the mixture was stirred further for 3 hours at 70°C and then cooled to room temperature. A white suspension was obtained of 23% polymer content and a viscosity of 100 mPas. The emulsion separated overnight.

### Comparative example 5

### Polymerization of VP and QVI in the presence of a mixture of sodium sulfate, using an anionic dispersant

Sodium sulfate (77 g), vinylpyrrolidone (128 g), quarternized vinylimmidazolium (64 g, 45 wt.-% solution in water) and 0,48 g of triallylamine were dissolved in water (347 g). As dispersant, 63 g of poly(acrylic acid) (25 wt.-% solution in water Sokalan PA80) was added. The pH of was adjusted to a value of 6.75 with a 50% solution of sulfuric acid and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.96 g) was added and the mixture was stirred further for 3 hours at 70°C and then cooled to room temperature. A white suspension was obtained of 23% polymer content and a viscosity of < 100 mPas (Spindle 4, 12 rpm). The emulsion was stable for 1 day.

### Comparative example 6

### Polymerization of VP and QVI using a cationic dispersant

Sodium sulfate (77 g), vinylpyrrolidone (128 g), quarternized vinylimmidazolium (64 g, 45 wt.-% solution in water) and 0,48 g of triallylamine were dissolved in water (347 g). As dispersant, 63 g of poly(vinylamine, Catiofast PR8106) (25 wt.-% solution in water) was added. The pH of was adjusted to a value of 6.75 with a 50% solution of sulfuric acid and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.96 g) was added and the mixture was stirred further for 3 hours at 70°C and then cooled to room temperature. A white suspension was obtained of 23% polymer content and a viscosity of 100 mPas. The emulsion separated overnight.

### Comparative example 7

### Polymerization of VP and QVI using an amphoteric dispersant with an overalll positive charge.

Sodium sulfate (77 g), vinylpyrrolidone (128 g), quarternized vinylimmidazolium (64 g, 50 wt.-% solution in water) and 0,48 g of triallylamine were dissolved in water (347 g). As dispersant, 63 g of poly(vinylamine-co-acrylic acid = 9:1 mol:mol) (25 wt.-% solution in water) was added. The pH of was adjusted to a value of 6.75 with a 50% solution of sulfuric acid and the emulsion was purged with nitrogen gas for ca. 10 minutes. The radical initiator (V-50; 0.5 g) was then added and the reaction mixture was heated to 60°C under a nitrogen atmosphere. After stirring the mixture at this temperature for 3 hours, a second batch of VA-50 (1 g) was added and the mixture was stirred further for 3 hours at 70°C and then cooled to room temperature. A white suspension was obtained of 23% polymer content and a viscosity of 1500 mPas. The emulsion separated overnight.

### Example 1

### Synthesis of poly(vinyl amine-co-acrylic acid) dispersants.

A 50% NaOH solution (159 g) was added dropwise to a mixture of acrylic acid (140 g) and ice (210 g). Vinyl formamide (60 g) was then added and the pH was adjusted to a value of 6.5. The resulting mixture was added over 3 hours to a stirred solution of water (430 g) and sodium dihydrogen phosphate (2 g) at 80°C under a constant nitrogen purge. Concurrently, a solution of V-50 initiator (1 g in 50 g water) was also added over 3.5 hours. After the additions, VA044 initiator (0,2 g) was added and the polymerization was carried out for a further 2 hours and thereafter cooled to room temperature. The polymer obtained had a K-value of 75,4 (1% polymer in a 5% NaCl solution). Hydrolysis of the vinyl formamide groups in this polymer was carried out by the addition of NaOH pellets (37,2 g) to the stirred polymer solution and then heating for 3 hours at 80°C. After cooling to room temperature, the pH of the resulting solution was adjusted to a value of 7 using a HCl solution. Other copolymers containing different ratios of VFA to acrylic acid were carried out in a similar fashion.

### Example 2

### Synthesis of poly(acrylic acid-co-DMAEA·MeCl) dispersants

A 50% NaOH solution (133 g) was added dropwise to a mixture of acrylic acid (120 g) and ice (148 g). This solution and a solution of DMA3-MeCl (350 g of a 80 wt.-% aqueous solution) diluted in 100 mL water were added over 3 hours to water (1300 g) at 70°C with rapid stirring and under a constant nitrogen purge. Concurrently, a solution of V-50 initiator (0,75 g in 130 g water) was also added over 3,5 hours. After the additions, VA-044 initiator (0,2 g) was added and the polymerization was carried out for a further 2 hours and thereafter cooled to room temperature. The pH of the resulting clear mixture was adjusted to 6,5. The polymer obtained had a K-value of 73,5 (1% polymer in a 5% NaCl solution). Other copolymers containing different ratios of DMAEA·MeCl to acrylic acid were carried out in a similar fashion.

### Example 3

### Polymerization of VP and Quat-311 using an amphoteric dispersant with an overalll negative charge

Sodium sulfate (77 g), vinylpyrrolidone (128 g), Quat-311 (64 g, 50 wt.-% solution in water) were dissolved in water (347 g). As dispersant, 63 g of poly(vinylamine-co-acrylic acid = 1:9 mol:mol) (28 wt.-% solution in water) was added. The pH of was adjusted to a value of 6.75 with a 50% solution of sulfuric acid and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.96 g) was added and the mixture was stirred further for 3 hours at 70°C and then cooled to room temperature. A white suspension was obtained of 23% polymer content and a viscosity of 3500 mPas. The stability of the emulsion was examined over a period of 2 months upon which no separation was observed.

### Example 4

### Polymerization of VP and Quat-311 using an amphoteric dispersant with an overalll negative charge

Sodium sulfate (77 g), vinylpyrrolidone (128 g), Quat-311 (64 g, 50 wt.-% solution in water) were dissolved in water (347 g). As dispersant, 63 g of poly(vinylamine-co-acrylic acid = 3:7 mol:mol) (25 wt.-% solution in water) was added. The pH of was adjusted to a value of 6.75 with a 50% solution of sulfuric acid and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.96 g) was added and the mixture was stirred further for 3 hours at 70°C and then cooled to room temperature. A white suspension was obtained of 23% polymer content and a viscosity of 1650 mPas. The stability of the emulsion was examined over a period of 2 months upon which no separation was observed.

### Example 5

### Polymerization of VP and Quat-311 in the presence of sodium sulfate

Sodium sulfate (77 g), vinylpyrrolidone (128 g), Quat-311 (64 g, 50 wt.-% Solution in water), and 0.48 g pentaerythrittetraallylether, were dissolved in water (300 g). As dispersant, 66 g of poly(vinylamine-co-acrylic acid = 2:8 mol:mol) (26 wt.-% solution in water) was added. The pH was adjusted to a value of 6.75 with a 50% solution of sulfuric acid and the emulsion was purged with nitrogen gas for ca. 10 minutes. The radical initiator (V-50; 0.24 g) was then added and the reaction mixture was heated to 60°C under a nitrogen atmosphere. After stirring the mixture at this temperature for 3 hours, a second batch of VA-50 (0.48 g) was added and the mixture was stirred further for 3 hours at 70°C and then cooled to room temperature. A white suspension was obtained of 23% polymer content and a viscosity of 1200 mPas. The stability of the emulsion was measured for 2 months upon which no separation was observed.

### Example 6

### Polymerization of vinylpyrrolidone and diallyl dimethylammonium chloride in the presence of sodium sulfate

Sodium sulfate (77 g), vinylpyrrolidone (128 g), Diallyl dimethylammonium chloride (50 g, 65 wt.-% Solution in water), and 1.28 g pentaerythrittetraallylether, were dissolved in water (380 g). As dispersant, 60 g of poly(vinylamine-co-acrylic acid = 2:8 mol:mol) (26 wt.-% solution in water) was added. The pH was adjusted to a value of 6.75 with a 50% solution of sulfuric acid and the emulsion was purged with nitrogen gas for ca. 10 minutes and heated to 60°C under a nitrogen atmosphere. The radical initiator solution (V-50; 0.24 g in 25 g of water) was then added to the emulsion in three hours. The reaction was continued for another 2 hours after which the reaction mixture was heated to 70°C. Then, a second batch of VA-50 (0.48 g) was added to the emulsion directly and the mixture was continued stirring for 3 hours at 70°C. Then the emulsion was cooled to room temperature. The white suspension which was obtained had a 23% polymer content and a viscosity of 1250 mPas. The stability of the emulsion was examined over a period of 2 months upon which no separation was observed.

### Example 7

### Polymerization of VP and QVI using an amphoteric dispersant with an overalll negative charge

Sodium sulfate (77 g), vinylpyrrolidone (128 g), quarternized vinylimmidazolium (64 g, 50 wt.-% solution in water) and 0,48 g of triallylamine were dissolved in water (347 g). As dispersant, 63 g of poly(vinylamine-co-acrylic acid = 1:9 mol:mol) (25 wt.-% solution in water) was added. The pH of was adjusted to a value of 6.75 with a 50% solution of sulfuric acid and the emulsion was purged with nitrogen gas for ca. 10 minutes. The radical initiator (V-50; 0.48 g) was then added and the reaction mixture was heated to 60°C under a nitrogen atmosphere. After stirring the mixture at this temperature for 3 hours, a second batch of VA-50 (0.96 g) was added and the mixture was stirred further for 3 hours at 70°C and then cooled to room temperature. A white suspension was obtained of 23% polymer content and a viscosity of 1100 mPas. The stability of the emulsion was examined over a period of 2 months upon which no separation was observed.

### Example 8

### Polymerization of VFA and QVI using an amphoteric dispersant with an overalll negative charge

Sodium sulfate (120 g) , ammonium sulfate (82,5 g), NaH₂PO₄ (2,4 g), and poly(acrylic acid-co-DMAEA·MeCl) (55:45 mol:mol; 235 g of a 22,5 wt.-% solution in water) were dissolved in water (334 g). A mixture of vinylformamide (128 g) and quarternized vinylimmidazolium (106,6 g, 45 wt.-% solution in water). The pH of the mixture was adjusted to a value of 6.75 with a 50% solution of sodium hydroxyde and then purged with nitrogen gas for ca. 10 minutes. The radical initiator (V-70; 0.48 g) was then added and the reaction mixture was heated to 40°C under a nitrogen atmosphere. After stirring the mixture at this temperature for 6 hours, a second batch of V-70 (0.48 g) was added and the mixture was stirred further for 2 hours at 60°C and then cooled to room temperature. A white suspension was obtained of 22% polymer content and a viscosity of 2900 mPas. The stability of the emulsion was examined over a period of 1 month upon which no separation was observed.

### Example 9

### Polymerization of VFA and DADMAC using an amphoteric dispersant with an overalll negative charge

Sodium sulfate (80 g), ammonium sulfate (55 g), NaH₂PO₄ (1,3 g), poly(acrylic acid-co-DMAEA·MeCl) (55:45 mol:mol; 152 g of a 22,5 wt.-% solution in water) and diallylamino dimethylammonium chloride (48,5 g of a 66 wt.-% aqueous solution) were dissolved in water (245 g). Vinylformamide (128 g) was then added. The ) pH of the mixture was adjusted to a value of 6.75 with a 50% solution of sodium hydrohyde and purged with nitrogen gas for ca. 10 minutes. The radical initiator (V-70; 0.3 g) was then added and the reaction mixture was heated to 40°C under a nitrogen atmosphere. After stirring the mixture at this temperature for 6 hours, V-044 (0,25 g) was added and the mixture was stirred further for 2 hours at 50 °C and then cooled to room temperature. A white suspension was obtained of 22% polymer content and a viscosity of 7000 mPas. The stability of the emulsion was examined over a period of 1 month upon which no separation was observed.

### Example 10

### Polymerization of VFA and DMAEA·MeCl using an amphoteric dispersant with an overalll negative charge

Sodium sulfate (80 g), ammonium sulfate (55 g), NaH₂PO₄ (1,43 g), and poly(acrylic acid-co-DMAEA·MeCl) (55:45 mol:mol; 88,5 g of a 22,5 wt.-% aqueous solution) were dissolved in water (245 g). A mixture of vinylformamide (144 g) and DMA3.MeCl (54,4 g of a 80 wt.-% aqueous solution) was then added. The pH of the mixture was adjusted to a value of 6.75 with a 50% solution of sodium hydrohyde and purged with nitrogen gas for ca. 10 minutes. The radical initiator (VA-044, 0.3 g) was then added and the reaction mixture was heated co 50°C under a nitrogen atmosphere. After stirring the mixture at this temperature for 5 hours, a second batch of V-044 (0,25 g) was added and the mixture was stirred further for 2 hours at 50°C and then cooled to room temperature.

A white suspension was obtained of 26% polymer content and a viscosity of 6000 mPas. The stability of the emulsion was examined over a period of 1 month upon which no separation was observed.

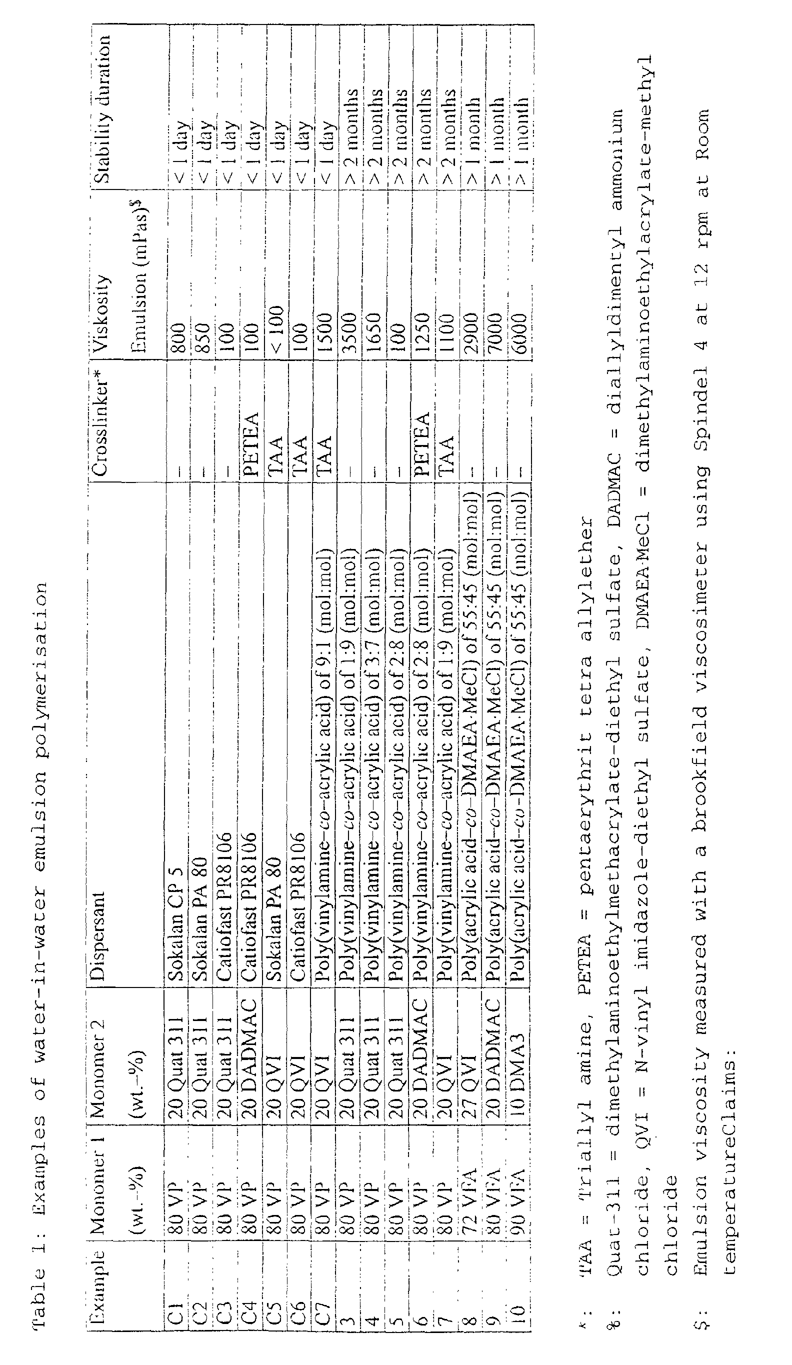

## Claims

1. A process for the production of water-soluble or water-swellable cationic polymers by
(i) free-radically initiated copolymerization of monomer mixtures in water comprising
(a) from 1 to 99% by weight of a cationic monomer or quaternizable monomer,
(b) from 1 to 99% by weight of a water-soluble monomer,
(c) from 0 to 10% by weight of a bi- or polyfunctional, free-radically copolymerizable monomer, adjusting the amounts (a) to (c) in such a way that the resulting polymer has an overall positive charge,
in the presence of 1 to 100% of the amount of a salt which is necessary to saturate the reaction medium with said salt and
in the presence of 0,1 to 20 % by weight referred to the weight of the dispersion, of an amphoteric dispersant having an overall negative charge, and
(ii) subsequent quaternization of the polymer if the monomer (a) employed is a non-quaternized monomer.

2. A process according to claim 1, where the amphoteric dispersant is a copolymer of a at least partly hydrolyzed vinylformamide units and acrylate units.

3. A process according to claim 1, where the amphoteric dispersant is a copolymer of dimethylaminoethylmethacrylamid units and acrylate units.

4. A dispersion comprising water-soluble or water-swellable cationic polymers obtained by a process according to claim 1.

5. The use of a dispersion according to claim 1 to 4 in water-treating, dewatering, water clarifications, papermaking, oil field, soil conditioning, mineral processing, hair and skin cosmetic, and biotechnological applications.
